Europäisches Patentamt

European Patent Office

Office européen des brevets

(19)

(11) Veröffentlichungsnummer: **0 269 782**
**B1**

(12) **EUROPÄISCHE PATENTSCHRIFT**

(45) Veröffentlichungstag der Patentschrift:
**27.09.89**

(51) Int. Cl.⁴: **B60K 5/12**, B60R 16/02

(21) Anmeldenummer: **87104800.5**

(22) Anmeldetag: **01.04.87**

(54) **Lagerung für ein Antriebsaggregat eines Kraftfahrzeugs.**

(30) Priorität: **04.12.86 DE 3641422**

(43) Veröffentlichungstag der Anmeldung:
**08.06.88 Patentblatt 88/23**

(45) Bekanntmachung des Hinweises auf die Patenterteilung:
**27.09.89 Patentblatt 89/39**

(84) Benannte Vertragsstaaten:
**DE ES FR GB IT NL SE**

(56) Entgegenhaltungen:
**FR-A- 2 459 751**

(73) Patentinhaber: **Dr.Ing.h.c. F. Porsche
Aktiengesellschaft, Porschestrasse 42,
D-7000 Stuttgart 40(DE)**

(72) Erfinder: **Quittenbaum, Jens, Dipl.-Ing., Steinweg 2,
D-7251 Weissach-Flacht(DE)**
Erfinder: **Roesems, Dirk, Dipl.-Ing., Leimtelstrasse 17,
D-7252 Weil der Stadt 4(DE)**

**Beschreibung**

Die Erfindung bezieht sich auf eine Lagerung für ein Antriebsaggregat eines Kraftfahrzeugs nach dem Oberbegriff des Anspruchs 1.

Es sind zur Aufnahme von Batterien im Kraftfahrzeug Tragkonsolen bekannt, die außen am Aufbau befestigte Stützbleche mit einer verbundenen Halteplatte bestehen. Eine solche Ausführung neigt in Verbindung mit einer Batteriemasse im Fahrbetrieb zu Schwingungen, durch welche die Verbindungen zum Fahrzeugaufbau hohen dynamischen Belastungen ausgesetzt sind, was zu Dauerfestigkeitsschäden führen kann. Bekannt sind auch unmittelbar an der Aufbaustruktur z. B. in verstärkt ausgeführten Bereichen von Trägern befestigte Lager für Antriebsaggregate, die getrennt von der Tragkonsole der Batterie vorgesehen sind.

Aufgabe der Erfindung ist es, eine baulich einfache und stabile Lagerung zu schaffen, die platzsparend in der Aufbaustruktur anzuordnen ist.

Diese Aufgabe wird erfindungsgemäß durch die kennzeichnenden Merkmale des Anspruchs 1 gelöst. Weitere vorteilhafte Ausbildungen der Erfindung beinhalten die Unteransprüche.

Durch eine integrierte Anordnung der Haltevorrichtung des Lagers in die Tragkonsole der Batterie, werden zwei stabile aufbauseitig befestigte Stützsäulen geschaffen, zwischen denen das Lager gehalten und von denen die Batterie getragen wird. Diese Stützsäulen gewährleisten ein erhöhtes Widerstandsmoment, so daß die auftretenden Schwingungsformen nahezu vollständig eliminiert werden können und Dauerfestigkeitsschäden vermeidbar sind. Die großflächigen Auflageflächen für das Lager führen außerdem zu einer relativ großen Einleitfläche für Reaktionskräfte, so daß entstehende Spannungen gesenkt werden können. Auch wird durch die Integration der Lager- Haltevorrichtung in die Batterie- Tragkonsole ein Mehreinsatz vom Material durch Verstarkungen, wie gedoppelte, profilierte Bleche, Verdickungen von Wandstärken usw. für die Abstützung des Lagers und der Batterie vermieden, so daß trotz Reduzierung und Vereinfachung der Bauteile eine Tragkonsole mit einem hohen Widerstandsmoment erzielt wird, die zudem noch platzsparend im Fahrzeugaufbau unterzubringen ist.

Nach der weiteren Ausführung der Erfindung können die Teile der Tragkonsole auch aus einem einzigen Formteil gebildet sein, wobei dann die Stützsäulen integrierte Bestandteile des Formteils sind. Hierdurch werden viele Einzelteile und Verbindungsstellen vermieden. Eine Montage wird vereinfacht und die Lagerhaltung verringert.

Ausführungsbeispiele der Erfindung sind in der Zeichnung dargestellt und werden im folgenden näher beschrieben.

Es zeigen:

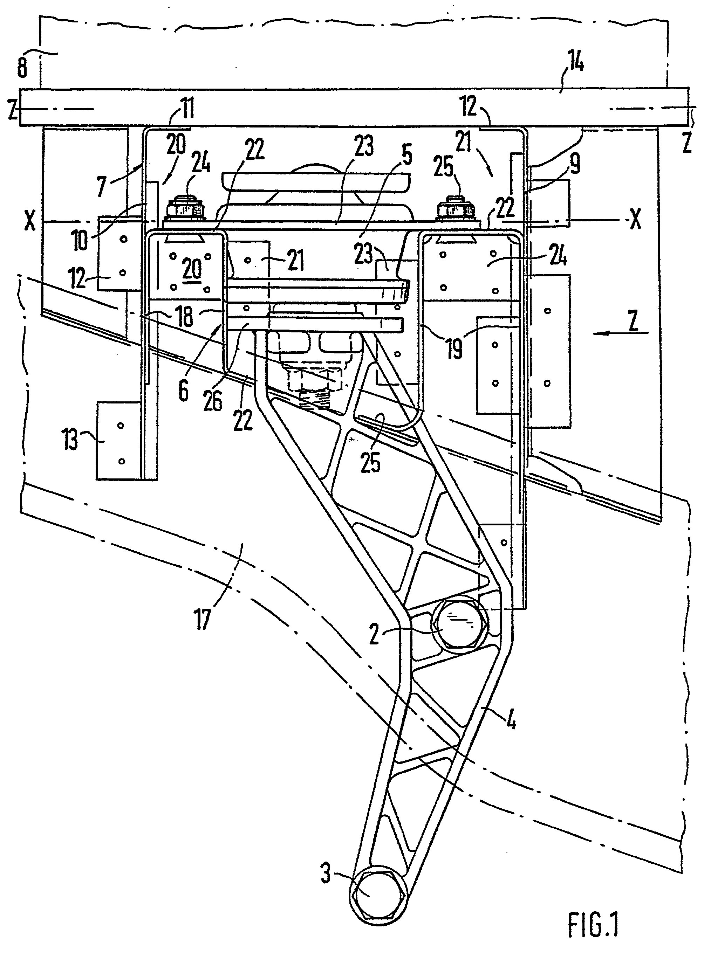

Fig. 1 eine Seitenansicht einer Lagerung in einer ersten Ausführungsform mit einer Haltevorrichtung und einer Tragkonsole,

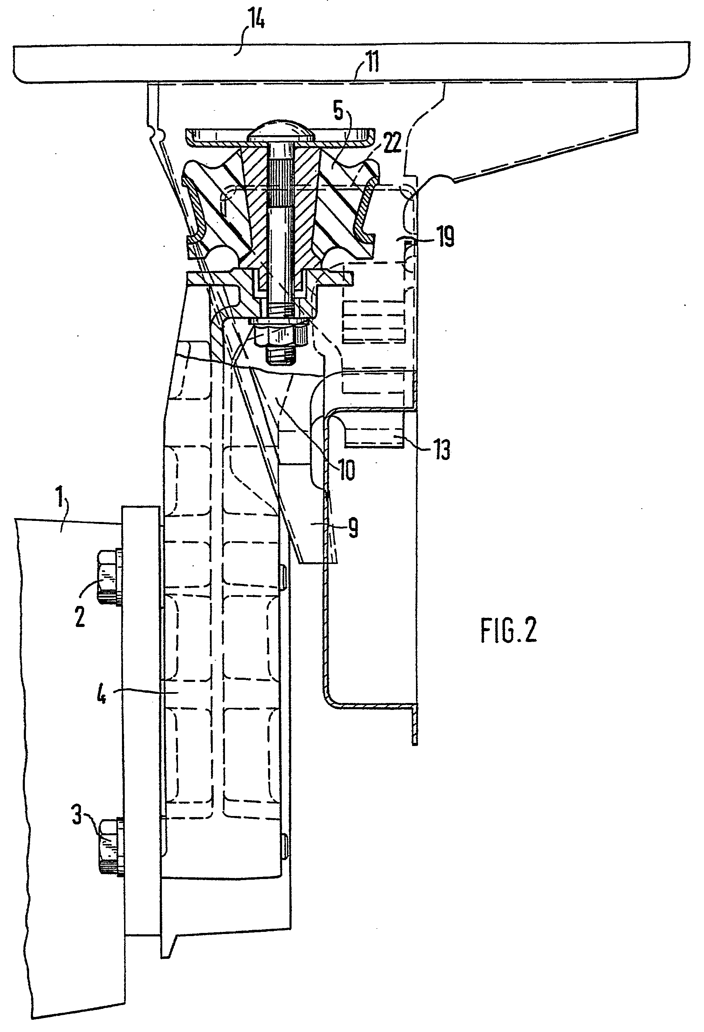

Fig. 2 eine Ansicht auf die Haltevorrichtung mit der Tragkonsole in Pfeilrichtung Z der Fig. 1 gesehen,

Fig. 3 eine Draufsicht zu Fig. 2,

Fig. 4 eine Seitenansicht auf eine weitere Ausbildung einer Haltevorrichtung in schematischer Darstellung,

Fig. 5 einen Schnitt nach der Linie V-V der Fig. 4,

Fig. 6 einen Schnitt nach der Linie VI-VI der Fig. 4,

Fig. 7 einen Schnitt nach der Linie VII-VII der Fig. 4,

Fig. 8 einen Schnitt nach der Linie VIII-VIII der Fig. 4,

Fig. 9 eine Seitenansicht auf eine zusammengebaute Lagerung und

Fig. 10 eine Ansicht auf die Lagerung gemäß Fig. 9 in Pfeilrichtung X gesehen.

In einem Vorderwagen eines Fahrzeugaufbaus ist ein quer eingebautes Antriebsaggregat angeordnet. Es ist jeweils an beiden Längsseiten der Aufbaustruktur gehalten. In Fahrtrichtung F gesehen an der linken Seite des Kraftfahrzeugs ist das Antriebsaggregat mit einem Tragarm 4 iber Schrauben 2, 3 verbunden. Dieser Tragarm 4 ist iber ein elastisches Lager 5 nach einer ersten Ausführung mit einer Haltevorrichtung 6 verbunden, die in eine Tragkonsole 7 für eine Batterie 8 integriert ist.

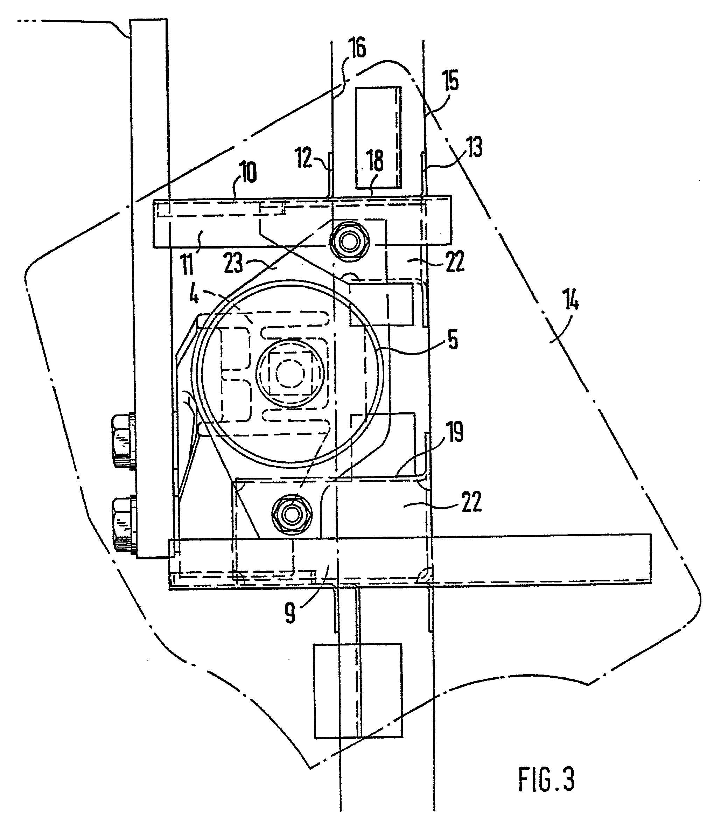

Diese Tragkonsole 7 umfaßt im wesentlichen zwei mit Abstand zueinander angeordnete vertikal ausgerichtete und in Fahrzeugquerrichtung sich erstreckende plattenförmige Außenwände 9 und 10, welche etwa dreieckförmig ausgeführt und mit rechtwinkligen Abstellungen 11 bis 13 versehen sind. Diese bilden eine Auflage- und Verbindungsfläche für eine erste Tragplatte 14 der Batterie 8. Weiteren Abstellungen 12 und 13 sind mit einer vertikalen Wand 16 eines Längsträgers 17 der Aufbaustruktur und mit einer Seitenwand 15 des Radkastens verbunden (Fig. 3).

Zwischen den beiden Außenwänden 9 und 10 der Tragkonsole 7 sind mit Abstand zueinander angeordnete Innenwände 18, 19 der Haltevorrichtung vorgesehen, die entsprechend der Außenwände ausgerichtet sind. Die Innenwände 18, 19 sind U-profilförmig ausgebildet und mit winkelförmigen Abstellungen 20 bis 25 versehen. Durch eine Verbindung zwischen den Außenwänden 9 und 10 und den Innenwänden 18 und 19 sowie deren Verbindung mit der Aufbaustruktur werden zwei hohlprofilförmige Stützsäulen 20, 21 gebildet, die zwischen sich das Lager 5 aufnehmen und kopfseitig auf der Tragplatte 14 die Batterie 8 aufnehmen.

Über die Abstellungen an den Innenwänden 18 und 19 sind diese mit der Seitenwand 15 und dem Längsträger 17 verbunden. Von den U-profilförmigen Innenwänden 18, 19 gebildete horizontale Stege 22 nehmen eine zweite Tragplatte 23 für das Lager 5 auf, die iber Schrauben 24, 25 festgelegt ist. Diese Tragplatte 23 ist in einer horizontalen Ebene X-X angeordnet, die unterhalb einer horizontalen Ebene Z-Z für die Tragplatte 14 der Batterie 8 angeordnet ist.

Insgesamt bilden die Außen- und Innenwände 9, 10 und 18, 19 der Tragkonsole 7 und der Haltevorrichtung 6 einen stabilen Kastenträger, der an vier Seiten geschlossen ist. Der Tragarm 4 ragt von unten mit seiner Lagerplatte 26 zwischen die U-profilförmigen Innenwände 18 und 19 bzw. zwischen die Stützsäulen 20, 21 und ist mit dem Lager 5 verbunden, wobei eine unbehinderte vertikale Bewegung im Betrieb zwischen den Säulen 20, 21 möglich ist.

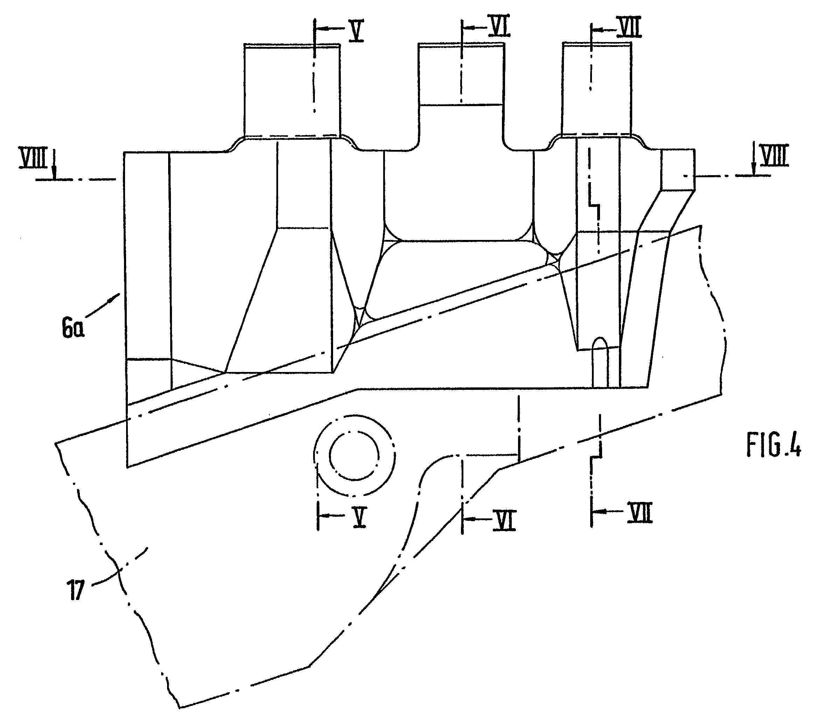

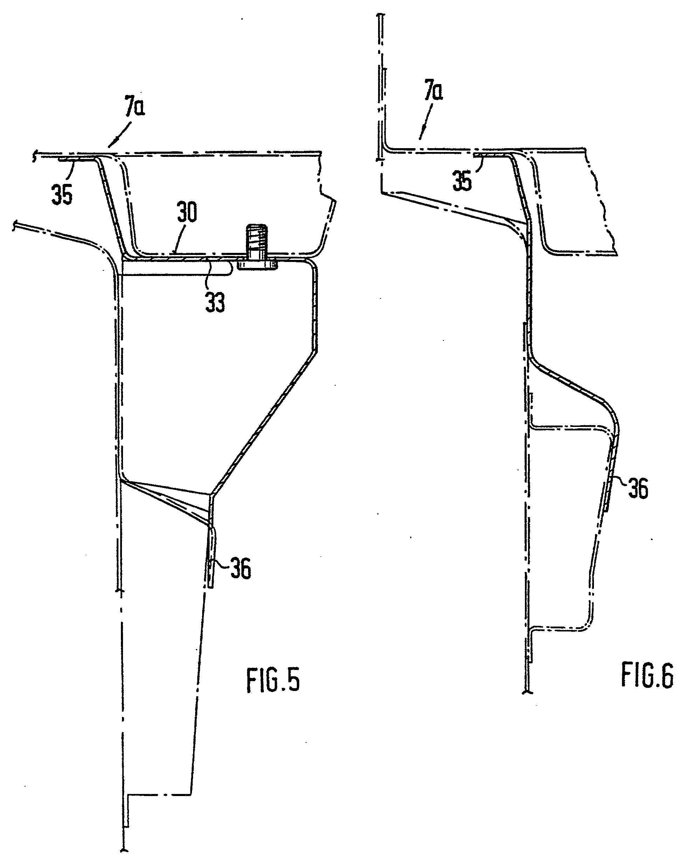

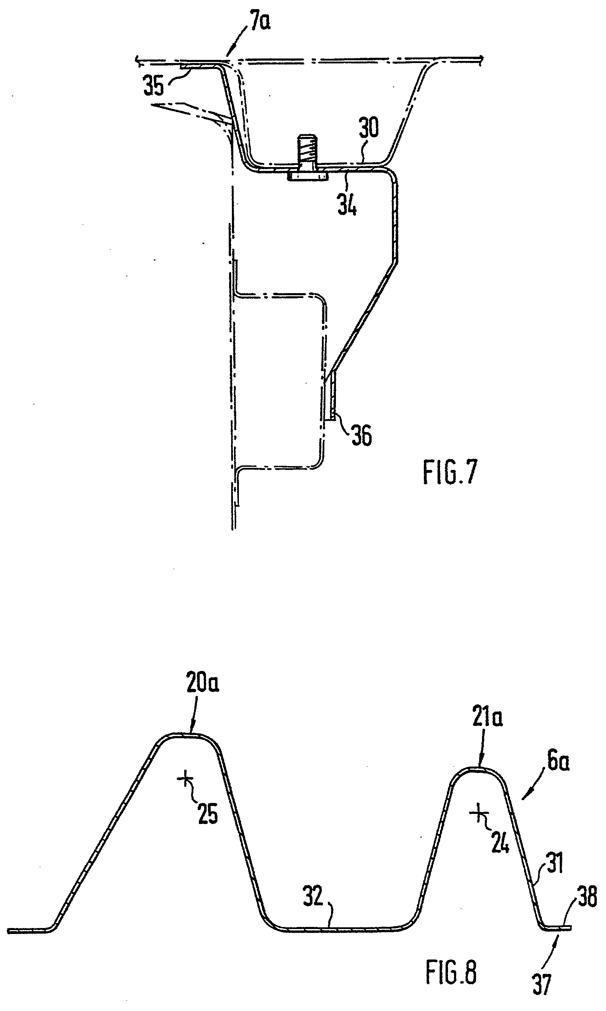

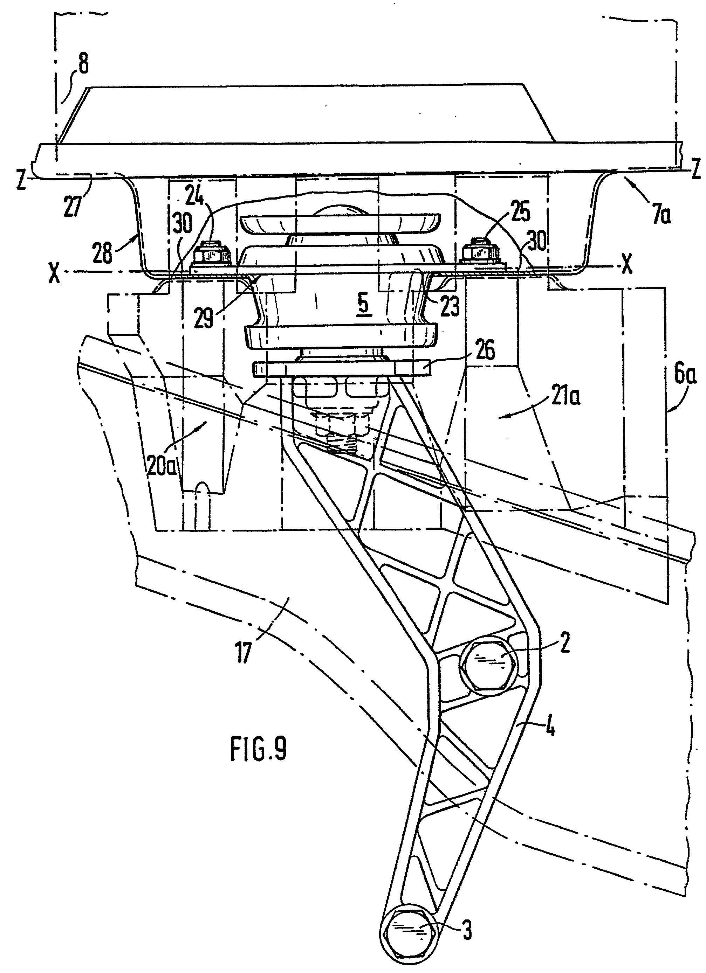

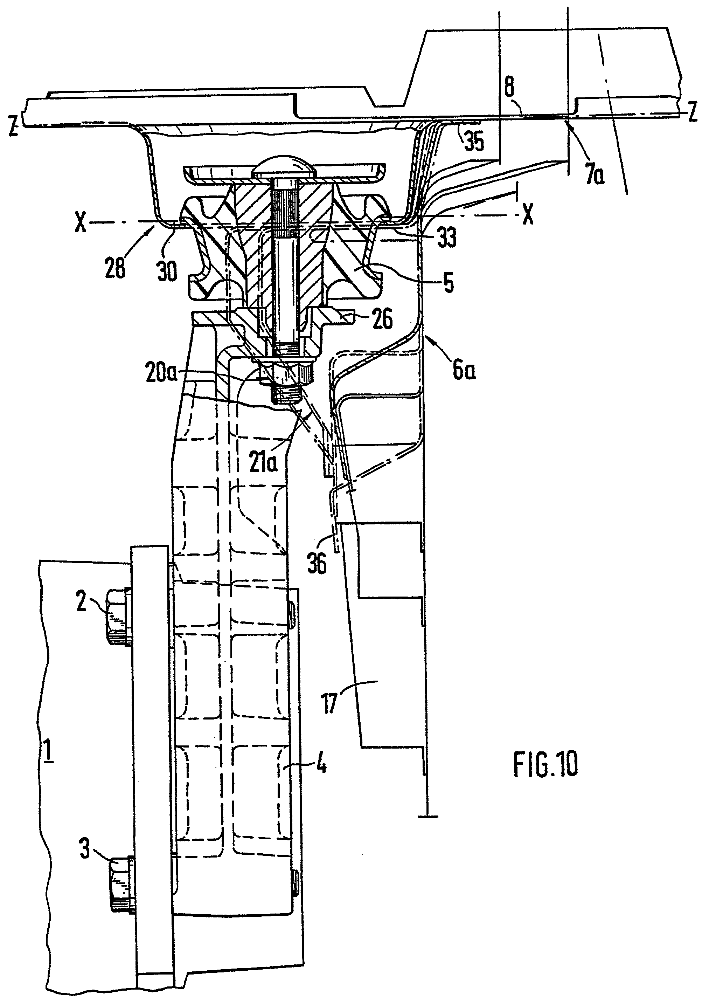

Nach einem weiteren Ausführungsbeispiel der Fig. 4 bis 10 umfaßt die Tragkonsole 7a ein plattenförmiges Auflageelement 27 für die Batterie 8.

In einem mittigen Bereich der Konsole 7a erstreckt sich eine topfförmige Vertiefung 28 die mit einer Durchstecköffnung 29 für das Lager 5 versehen ist. Dieses ist iber die Tragplatte 23 innenseitig am Boden 30 der Vertiefung 18 abgestützt. Die Tragkonsole 7a ist mit der Haltevorrichtung 6a zu einem gemeinsamen Profil-Träger für die Lagerung der Batterie 8 und für das Lager 5 verbunden. Die Haltevorrichtung 6a besteht im wesentlichen aus einem einteiligen Formteil 31, das mit Abstand angeordnete und über einen Steg 32 verbundene kastenförmige Stützsäulen 20a und 21a bildet. Deren vertikale Wände sind obenseitig jeweils von einer horizontal abgewinkelten Wand 33, 34 abgeschlossen und zur Verbindung mit der Aufbaustruktur sind entsprechende Abstellungen 35 vorgesehen. Weitere Abstellungen 36 und 38 zur Befestigung sind am unteren Ende des Formteils 31 sowie an den äußeren freien auslaufenden Enden 37 angeordnet. Über den Steg 32 des Formstücks 31 wrd eine flächige Abstützung zum Langsträger 17 bzw. zur Seitenwand des Radkastens erzielt.

Das Lager 5 ist teilweise unterhalb der Batterie 8 und teilweise zwischen den Stützsäulen 20a und 21a angeordnet. Die Befestigung des Lagers 5 erfolgt iber die Schrauben 24 und 25 deren Längsachsen etwa mit denen der Stützsäulen 20a und 21a zusammenfallen.

## Patentansprüche

1. Lagerung für ein Antriebsaggregat eines Kraftfahrzeugs, insbesondere ein quer im Vorderwagen des Fahrzeugs eingebauten Aggregats, das über mehrere elastische Lager an der Aufbaustruktur abgestützt ist, dadurch gekennzeichnet, daß mindestens ein elastisches Lager (5) mit einer Haltevorrichtung (6; 6a) verbunden ist, die als integrierter Teil einer an einem Langsträger (17) der Aufbaustruktur befestigten Tragkonsole (7; 7a) für eine Batterie (8) ausgeführt ist.

2. Lagerung nach Anspruch 1, dadurch gekennzeichnet, daß die Tragkonsole (7) zwei mit Abstand zueinander angeordnete vertikale plattenförmige Außenwände (9 und 10) umfaßt, die mit U-profilförmig ausgeführten Innenwänden (18, 19) der zwischenliegenden Haltevorrichtung (6) zu hohlprofilartigen Stützsäulen (20, 21) verbunden sind.

3. Lagerung nach den Ansprüchen 1 oder 2, dadurch gekennzeichnet, daß die Außenwände (9, 10) der Stützsäulen (20, 21) mit einer in einer oberen horizontalen Ebene (Z-Z) angeordneten Batterie-Tragplatte (14) und die Innenwände (18, 19) mit einer in einer darunter liegenden weiteren horizontalen Ebene (X-X) angeordneten Lager- Tragplatte (23) verbunden sind.

4. Lagerung nach einem oder mehreren der vorhergehenden Ansprüche, dadurch gekennzeichnet, daß die Außen- und Innenwände (9, 10 und 18, 19) der Stützsäulen (20, 21) winkelförmige Abstellungen (11 bis 13 und 20 bis 25) aufweisen, die mit einer vertikalen und/oder horizontalen Wand (16) des Längsträgers (17) sowie mit einer Seitenwand (15) eines Radkastens verbunden sind.

5. Lagerung nach einem oder mehreren der vorhergehenden Ansprüche, dadurch gekennzeichnet, daß die Innenwände (18, 19) der Stützsäulen (20, 21) zur Aufnahme der Lager- Tragplatte (23) in einer horizontalen Ebene (X-X) angeordnete Auflagestege (22) aufweisen.

6. Lagerung nach Anspruch 1, dadurch gekennzeichnet, daß die Tragkonsole (7a) ein plattenförmiges Auflageelement (27) mit einer topfförmigen Vertiefung (28) umfaßt, die eine Öffnung (29) für das Lager (3) aufweist.

7. Lagerung nach den Ansprüchen 1 und 6, dadurch gekennzeichnet, daß die Tragkonsole (7a) mit einer als einteiliges Formteil (31) ausgebildeten Haltevorrichtung (6a) verbunden ist, die zwei vertikale Stützsäulen (20a und 21a) aufweist, zwischen denen das Lager (5) angeordnet ist und auf denen der Boden (30) der topfförmigen Vertiefung (28) aufliegt.

8. Lagerung nach einem oder mehreren der vorhergehenden Ansprüche, dadurch gekennzeichnet, daß eine Lagerplatte (23) in der Vertiefung (28) auf dem Boden (30) gehalten und auf den Säulen (20a, 21a) abgestützt ist.

9. Lagerung nach einem oder mehreren der vorhergehenden Ansprüche, dadurch gekennzeichnet, daß die Haltevorrichtung (6a) einen kastenförmigen Träger bildet, der Abstellungen (35, 36, 38) und vertikale Wandelemente (32) umfaßt, die mit dem Längsträger (11) und/oder einer Seitenwand (15) des Radkastens verbunden sind.

10. Lagerung nach einem oder mehreren der vorhergehenden Ansprüche, dadurch gekennzeichnet, daß mit dem Lager (5) ein Tragarm (4) verbunden ist, der sich etwa in einer senkrechten Ebene erstreckt und zwei Befestigungspunkte (2, 3) für ein Getriebe des Antriebsaggregats aufweist.

## Claims

1. A mounting for a drive unit of a motor vehicle, in particular a unit which is installed transversely in the front car of the vehicle and is supported via a plurality of resilient bearings on the body structure, characterised In that at least one resilient bearing (5) is connected to a retaining device (6; 6a) formed as an integral part of a carrying bracket (7; 7a) for a battery (8), the carrying bracket being fixed on a longitudinal carrier (17) of the body structure.

2. A mounting according to claim 1, characterised in that the carrying bracket (7) comprises two mutually-spaced, vertical, plate-shaped external walls (9 and 10) connected to internal walls (18, 19) of the interposed holding device (6), the internal walls being constructed with a U-shaped profile, to form supporting columns (20, 21) of hollow profile.

3. A mounting according to claims 1 or 2, characterised in that the external walls (9, 10) of the supporting columns (20, 21) are connected to a battery carrying plate (14) arranged in an upper horizontal plane (Z-Z) and the internal walls (18, 19) are connected to a bearing carrying plate (23) arranged in a further horizontal plane (X-X) located therebelow.

4. A mounting according to one or more of the preceding claims, characterised in that the external and internal walls (9, 10 and 18, 19) of the supporting columns (20, 21) have angular offsets (11 to 13 and 20 to 25) which are connected to a vertical and/or horizontal wall (16) of the longitudinal carrier (17) and to a lateral wall (15) of a wheel casing.

5. A mounting according to one or more of the preceding claims, characterised in that the internal walls (18, 19) of the supporting columns (20, 21) have contact webs (22) arranged in a horizontal plane (X-X) for receiving the bearing carrying plate (23).

6. A mounting according to claim 1, characterised in that the carrying bracket (7a) comprises a plate-shaped contact element (27) with a pot-shaped recess (28) having an opening (29) for the bearing (3).

7. A mounting according to claims 1 and 6, characterised in that the carrying bracket (7a) is connected to a retaining device (6a) constructed as a single-piece shaped part (31) comprising two vertical supporting columns (20a and 21a), between which the bearing (5) is arranged and on which the base (30) of the pot-shaped recess (28) rests.

8. A mounting according to one or more of the preceding claims, characterised in that a bearing plate (23) is held in the recess (28) on the base (30) and is supported on the columns (20a, 21a).

9. A mounting according to one or more of the preceding claims, characterised in that the holding device (6a) forms a box-shaped carrier which comprises offsets (35, 36, 38) and vertical wall elements (32) connected to the longitudinal carrier (11) and/or a side wall (15) of the wheel casing.

10. A mounting according to one or more of the preceding claims, characterised in that a carrying arm (4) is connected to the bearing (5), the carrying arm (4) extending in a roughly vertical plane and having two fixing points (2, 3) for a gear mechanism of the drive unit.

**Revendications**

1. Suspension pour un groupe moteur d'un véhicule automobile, en particulier un groupe monté transversalement à l'avant du véhicule, qui prend appui contre la structure de carrosserie, par plusieurs paliers élastiques, caractérisée en ce qu'au moins un palier élastique (5) est assemblé à un dispositif de fixation (6; 6a) qui fait partie intégrante d'une console de support (7; 7a) d'une batterie (8), fixée sur un longeron (17) de la structure de carrosserie.

2. Suspension selon la revendication 1, caractérisée en ce que la console de support (7) comporte deux parois extérieures (9 et 10) en forme de plaque, écartées, disposées verticalement, qui sont assemblées à des parois intérieures (18, 19), en forme de profilé en U, du dispositif de fixation (6) intercalé, pour former des colonnes d'appui (20, 21) en forme de profilé creux.

3. Suspension selon la revendication 1 ou 2, caractérisée en ce que les parois extérieures (9, 10) des colonnes d'appui (20, 21) sont assemblées à une plaque de support de batterie (14) située dans un plan horizontal Z-Z supérieur, et en ce que les parois intérieures (18, 19) sont assemblées à une plaque de support de palier (23), disposée dans un autre plan horizontal X-X situé au-dessous.

4. Suspension selon une ou plusieurs des revendications ci-dessus, caractérisée en ce que les parois extérieures (9, 10) et les parois intérieures (18, 19) des colonnes d'appui (20, 21) comportent des surfaces d'appui (11 à 13 et 20 à 25) en équerre, qui sont assemblées à une paroi verticale et/ou horizontale (16) du longeron (17) ainsi qu'à une paroi latérale (15) d'un passage de roue.

5. Suspension selon une ou plusieurs des revendications ci-dessus, caractérisée en ce que les parois intérieures (18, 19) des colonnes d'appui (20, 21) comportent des traverses d'appui (22) disposées dans un plan horizontal X-X, pour recevoir la plaque de support de palier 23.

6. Suspension selon la revendication 1, caractérisée en ce que la console de support (7a) comporte un élément d'appui (27) en forme de plaque, avec un creux (28) en forme de pot, qui présente une ouverture (29) pour le palier (3).

7. Suspension selon les revendications 1 et 6, caractérisée en ce que la console de support (7a) est assemblée à un dispositif de fixation (6a), se présentant sous la forme d'une pièce usinée (31) d'un seul tenant, qui comporte deux colonnes d'appui (20a et 21a) entre lesquelles est placé le palier (5) et sur lesquelles repose le fond (30) du creux (28) en forme de pot.

8. Suspension selon une ou plusieurs des revendications ci-dessus, caractérisée en ce qu'une plaque de support (23) est maintenue dans le creux (28), sur le fond (30) et prend appui sur les colonnes (20a, 21a).

9. Suspension selon une ou plusieurs des revendications ci-dessus, caractérisée en ce que le dispositif de fixation (6a) forme une poutre en caisson qui comporte des surfaces d'appui (35, 36, 38) et des éléments de paroi (32) verticaux qui sont assemblés au longeron (11) et/ou à une paroi latérale (15) du passage de roue.

10. Suspension selon une ou plusieurs des revendications ci-dessus, caractérisée en ce qu'un bras de support (4) est assemblé au palier (5), et s'étend dans un plan à peu près vertical, et comporte deux points de fixation (2, 3) pour une transmission du groupe moteur.

FIG.1

FIG.2

FIG.3

FIG.4

EP 0 269 782 B1

7a

35

30

33

36

FIG.5

7a

35

36

FIG.6

EP 0 269 782 B1

FIG.7

FIG.8

FIG.9

FIG.10